# EUROPÄISCHE PATENTSCHRIFT

(11) **EP 1 045 512 B1**
(45) Veröffentlichungstag und Bekanntmachung des Hinweises auf die Patenterteilung: **25.11.2009**
(21) Anmeldenummer: 99810303.0
(22) Anmeldetag: 12.04.1999
(51) Int. Cl.: H02P 8/24, G07D 11/00, B65H 5/28, B65H 29/00

(54) **Schrittmotor mit einer elektrischen Ansteuerschaltung sowie Anordnung mit einem Schrittmotor**
Stepper motor with driving circuit and arrangement with stepper motor
Moteur pas à pas avec circuit d'attaque et arrangement avec moteur pas à pas

(43) Veröffentlichungstag der Anmeldung: 18.10.2000
(73) Patentinhaber: Talaris Holdings Limited, Chineham Business Park Basingstoke Hampshire RG24 8QZ (GB)
(72) Erfinder: Gerber, Georges, 2720 Tramelan (CH); Gaeumann, Olivier, 2000 Neuchâtel (CH); Monneron, Pierre-Yves, 3172 Niederwangen (CH)
(74) Vertreter: Roshardt, Werner Alfred

(56) Entgegenhaltungen:
- EP-A- 0 367 693
- EP-A- 0 583 724
- DE-A- 3 326 358
- DE-A- 4 022 637
- PATENT ABSTRACTS OF JAPAN vol. 096, no. 007, 31. Juli 1996 (1996-07-31) & JP 08 067382 A (GLORY LTD), 12. März 1996 (1996-03-12)

## Beschreibung

### Technisches Gebiet

Die Erfindung betrifft eine Anordnung zum gebremsten Transportieren von band- oder fadenartigem Material mit einem Schrittmotor gemäß dem Oberbegriff des Patentanspruchs 1.

### Stand der Technik

Aus dem Stand der Technik ist bekannt, dass der Abbremsvorgang eines elektrischen Schrittmotors durch die den Motor antreibenden Spulen beschleunigt werden kann. Es ist beispielsweise bekannt, dass einzelne oder mehrere Spulen kontinuierlich kurzgeschlossen werden.

In der EP 0 367 693 A1 (Paul Janin) wird zudem ein Verfahren beschrieben, welches das Anhalten eines Schrittmotors beschleunigt. Dabei ist vorgesehen, dass ein zentraler Computer die Phasen der die antreibenden Spulen durchfliessenden Wechselströme invertiert.

Zum Verkürzen der Schwingungsperiode einer Dämpfungsschwingung eines im Moment angehaltenen Rotors eines Schrittmotors schlägt die DE 33 26 358 A1 (Canon K.K) vor, mehrere der Spulen miteinander kurzzuschliessen, um einen Schleifenstrom und eine der Schwingungsbewegung entgegenwirkende elektromagnetische Kraft zu erzeugen.

Die DE 40 22 637 (Rainer Schroeker) zeigt eine Bremsschaltung bei der passiv ohne jegliche Einspeisung eines externen Stromes ein vorgegebener Widerstand mit einem Tastverhältnis an die Erregerwicklung anleg- und abschaltbar ist.

JP 08067382 zeigt eine Anordnung zum Transportieren von band- oder fadenartigem Material.

### Darstellung der Erfindung

### Aufgabe der Erfindung

Aufgabe der Erfindung ist es, eine Anordnung zum Auf- und/oder Abwickeln von band- bzw. fadenartigem Material mit einem Schrittmotor mit einer einfachen elektrischen Steuerung zu schaffen, der ein einstellbares Bremsverhalten hat.

### Lösung der Aufgabe

Die obengenannte Aufgabe wird dadurch gelöst, daß neben einem steuerbaren Stromfluß durch die Erregerwicklungen eines Schrittmotors zu dessen Antrieb mit der Ansteuerschaltung, passiv ohne jegliche Einspeisung eines externen Stromes durch jede Erregerwicklung mit der Ansteuerschaltung ein vorgegebener Widerstand mit einem Tastverhältnis an jede Erregerwicklung anleg- und abschaltbar ist, um damit einen vorgebbaren Bremsverlauf in Abhängigkeit der Rotationsgeschwindigkeit des Motors zu erreichen.

Weitere Vorteile der Erfindung sowie Ausführungsvarianten ergeben sich aus dem untenstehenden Text.

### Kurze Beschreibung der Zeichnung

Im folgenden werden Beispiele der erfindungsgemäßen Anordnung und deren erfindungsgemäßen Einsatzes anhand der Figurenzeichnungen näher erläutert. Es zeigen:
- Fig. 1: eine schematische Darstellung einer erfindungsgemäßen Anordnung mit einem beispielsweisen Einsatz des erfindungsgemäßen Schrittmotors,
- Fig. 2: eine erfindungsgemäße Ansteuerschaltung für einen mit einem vorgebbaren Bremskraftverlauf wirkenden Schrittmotor,
- Fig. 3: einen Bremskraftverlauf bei einer bekannten Ansteuerung von Schrittmotoren, einen Bremskraftverlauf bei einer erfindungsgemäßen Ansteuerung von Schrittmotoren und
- Fig. 5: eine Variante zu der in **Figur 1** dargestellten Anordnung.

### Wege zur Ausführung der Erfindung

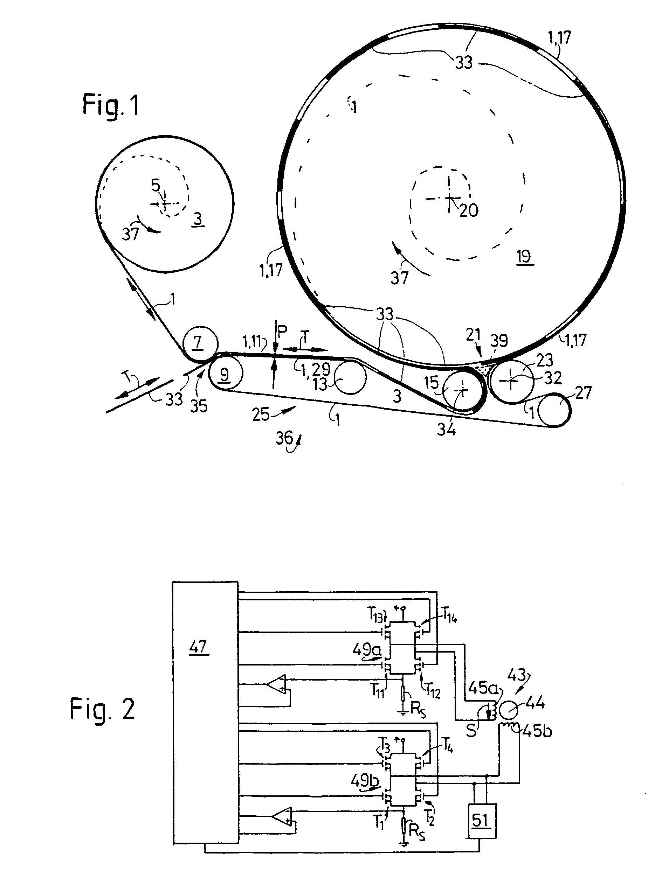

**Figur 1** zeigt eine prinzipielle Darstellung einer erfindungsgemäßen Anordnung mit zwei (nicht explizit dargestellten) gleich ausgebildeten, unten beschrieben erfindungsgemäß angesteuerten Schrittmotoren. Die hier dargestellte Anordnung dient zum auf- und abwickeln eines band- bzw. fadenartigen Materials, hier eines sog. Speicherbandes **1**. Mit diesem Speicherband **1** wird hier beispielsweise eine Ein- und Ausspeicherung von blattförmigen Objekten, hier von Banknoten **33** vorgenommen. In **Figur 1** sind die Dickenverhältnisse der auf einer Speicherspule **19** als Wickelspeicher abzuspeichernden Banknoten **33** und diejenigen des Speicherbandes **1** stark überhöht dargestellt.

**Figur 1** zeigt eine Seitenansicht der Anordnung. Das Ende eines in Transportrichtung **T** einstückigen, einzigen Speicherbands **1** ist an einer Bandreservespule **3** befestigt. Das Speicherband **1** ist auf die Bandreservespule **3** auf- sowie von dieser abwickelbar. Die Bandreservespule **3** ist um ihre Achse **5** drehbar. Auf die Achse **5** wirkt einer der unten beschriebenen Schrittmotoren. Von der Bandreservespule **3** läuft das Speicherband **1** über eine Umlenkrolle **7**, der gegenüber eine Anpressrolle **9** angeordnet ist. Von der Umlenkrolle **7** führt der Weg des Speicherbandes **1**, als zweiter Bandteil **11** bezeichnet, über eine Spannrolle **13** als Speicherbandzusammenpreßelement zu einer Umlenkrolle **15** als Speicherbandumlenkelement. Nach dem Umlenken verläuft das Speicherband **1** als dritter Bandteil **17** außen auf einer Speicherspule **19**. Die Umlenkspule **15** ist auf die jeweils oberste Lage (dritter Bandteil) des Speicherbandes **1** auf der Speicherspule **19** angedrückt und wird somit über die Speicherspule **19** angetrieben. Die Speicherspule **19** ist um eine feststehende Achse **20** drehbar, welche mit einem weiteren erfindungsgemäßen Schrittmotor antreib- sowie auch bremsbar ist. Der Bandteil **17** verläuft als Bandteil **22** bezeichnet bis auf einen Ausschlaufbereich **21** außen auf dem Umfang der Speicherspule **19** und wird dann mit einer weiteren Umlenkrolle **23** als Umlenkelement vom Umfang weggeführt. Auch diese Umlenkrolle **23** läuft analog wie die Umlenkrolle **15** außen angepreßt auf dem aufgewickelten Speicherband **1**. Von dieser Umlenkrolle **23** verläuft das Speicherband **1** als Schlaufe **25** über eine weitere Umlenkrolle **27** zur Anpreßrolle **9**. Nach dieser Anpreßrolle **9** wird es gemeinsam mit dem zweiten Bandteil **11** unter diesem liegend als erster Bandteil **29** über die Spannrolle **13** und die Umlenkrolle **15** zur Speicherspule **19** geführt. Auf der Speicherspule **19** verläuft es dann unterhalb des Bandteils **17** als vierter Bandteil **31** und ist dann letztendlich nach mehreren Wicklungen, welche hier schematisch gestrichelt angedeutet sind, in der Nähe der Achse **20** in der Speicherspule **19** befestigt.

Unter einem einzigen Speicherband in Wickelrichtung wird lediglich ein Band **1** verstanden, das von einem Ort, hier einer Bandreservespule **3**, ausgeht und auf einer Speicherspule **19** endet. Zwischen den Wicklungen auf der Speicherspule **19** sind die Banknoten **33** gehalten. In Breitenrichtung, also senkrecht zur Transportrichtung, können selbstverständlich mehrere Bänder bevorzugt parallel zueinander verlaufend vorhanden sein.

Obwohl hier in Transportrichtung nur ein einziges Speicherband **1** verwendet wird, werden die Banknoten **33** dennoch infolge der Schlaufenbildung zwischen zwei Bandteilen transportiert, was einen äußerst sicheren Transport ergibt.

Der Durchmesser der Speicherspule **19** ändert sich beim Ein- und Abspeichern der Banknoten **33** infolge Auf- und Abwickelns des Speicherbandes **1** mit den dazwischen liegenden Noten **33.** Die beiden Umlenkrollen **15** und **23** sollen immer möglichst nahe beieinanderliegend (möglichst kleiner Ausschlaufbereich **21** ) und möglichst nahe am sich ändernden Umfang der Speicherspule **19,** bevorzugt auf ihm, liegen. Um dies zu erreichen, ist der Abstand der Achsen **32** und **34** der beiden Umlenkrollen **23** und **15** relativ zur Achse **20** der Speicherspule **19** in Abhängigkeit des sich ändernden Speicherspulendurchmessers veränderbar ausgebildet. In der hier beschriebenen beispielsweisen Ausführung ist die Achse **20** lagestarr gewählt. Die Achsen **15** und **32** sind in einem Abstand fest miteinander verbunden und gefedert gegen den Mantel der Speicherspule **1** gedrückt. Die für ein sicheres Halten der Banknoten zwischen den Bandteilen **11** und **29** notwendige Preßkraft **P** wird durch ein Umlenken der beiden Bandteile **11** und **29** mit der Spannrolle **13** zusammen mit dem unten beschriebenen einstellbaren Bremsverhalten des auf die Achse **5** wirkenden Schrittmotors beim Einspeichern der Banknoten **33** auf die Speicherspule **19** erreicht. Beim Ausspeichern wirkt dann der beim Einspeichern als Antriebsmotor auf die Achse **20** wirkende Schrittmotor als bremsender Motor. Die Umlenkrollen **7, 15, 23** und **27,** die Anpreßrolle **9,** die Spannrolle **13** und die Bandschlaufe **25** definieren eine Führungseinheit **36** im Speicherbandeinlaufbereich zur Speicherspule **19.**

Zum Einspeichern von blattförmigen, biegsamen Objekten, insbesondere von Banknoten, werden diese zu einem Einführ- bzw. Ausgabeschlitz **35** in der Regel mit einem (nicht dargestellten) Bandförderer gebracht. Der Schlitz **35** wird gebildet aus den über die Umlenkrolle **7** und die Anpreßrolle **9** laufenden Bandteilen. Die Objekte **33** werden nun eingeklemmt zwischen den beiden Bandteilen transportiert. Das Einklemmen während des Transports wird durch die Auslenkung der Spannrolle **13** quer zur Transportrichtung **T** bewirkt. Da die Lage der beiden Umlenkrollen **15** und **23** sich während dem Einspeichern von Objekten bzw. deren Ausspeicherung ändert, muß auch die Spannung der Spannrolle **13** durch deren Lageverschiebung geändert werden, da die Achse **5** der Bandreservespule **5** fest gewählt worden ist.

Der Ausschlaufbereich **21** ist möglichst schmal zu wählen, damit der Mantelabschnitt kleiner wird als die kleinste Breite der unten beschriebenen aufgewickelten Objekte **33**, hier Banknoten. Die Objekte **33** sind durch einen nahezu vollständigen Umlauf auf dem Mantel der Speicherspule **19** bereits "vorgebogen"; in vorteilhafter Weise wird man den freien Mantelumfang auf ein Drittel der Objektbreite beschränken.

In der **Figur 1** ist in der Seitenansicht quer zur Transportrichtung **T** lediglich ein Speicherband **1** sichtbar. Es werden je nach Querausdehnung der zu transportierenden Objekte **33** mehrere Speicherbänder **1,** in der Regel mindestens zwei, verwendet.

Auch die sich ändernde Umfangsdifferenz der Speicherspule **19** wird durch die Anordnung mit einem bremsenden Schrittmotor aufgefangen.

Das Einspeichern der Banknoten **33** überwacht man bevorzugt zur optimalen Speicherplatzausnützung auf der Speicherspule **19** mit (nicht dargestellten) Sensoren. Es kann nun vor dem Einführ-/Ausgabeschlitz **35** ein optischer Sensor angeordnet werden, der den Abstand der ankommenden Banknoten **33** zueinander überwacht. Je nach Abstand der Banknoten **33** wird dann über eine nicht dargestellte Steuerung der Antrieb für die Speicherspule **19** aus- bzw. eingeschaltet. Eine sichere Abspeicherung der Objekte **33** ist auf dem Umfang der Speicherspule **19** gegeben. Es wird deshalb immer die Speicherspule **19** solange angetrieben, bis die "letzte" Banknote **33** auf dem Speicherspulenmantel aufgewickelt ist. Bei einer erneuten Einspeicherung würde somit immer eine Umfangslänge, welche dem Bandweg vom Ort **35** bis annähernd zum Ort der Umlenkrolle **15** entspricht, "verloren" gehen. Zur Vermeidung dieses Speicherverlustes wird vor jedem neuen Einspeichern ein Speicherbandrückzug vorgenommen, bis die "letzte" Banknote **33** sich wieder im unmittelbaren Bereich der Umlenkrolle **7** bzw. der Anpressrolle **13** befindet. Der "Rückzugsweg" wird bevorzugt mit einem weiteren Sensor überwacht, der in unmittelbarer Nähe der Umlenkrolle **7** bzw. der Anpressrolle angeordnet ist.

Die Banknoten haften auf Grund eines Biegeeffektes gut auf dem Umfang der Speicherspule **19,** da sie während einer nahezu vollständigen Umdrehung gebogen werden. Dieser Haftungseffekt wird ferner durch eine gewisse statische Aufladung bei einem Speicherband **1** aus elektrisch isolierendem Material und ebenfalls elektrisch nichtleitenden Banknoten verstärkt. Bei stark verschmutzten und/oder "lappigen" Banknoten **33** kann jedoch diese Haftung stark reduziert sein. Um ein zwar äußerst unwahrscheinliches Abheben der Banknoten **33** im Ausschlaufbereich **21** zu verhindern, kann dort ein im Querschnitt zwickelartiges, in der **Figur 1** gestrichelt angedeutetes Führungselement **39** angeordnet werden.

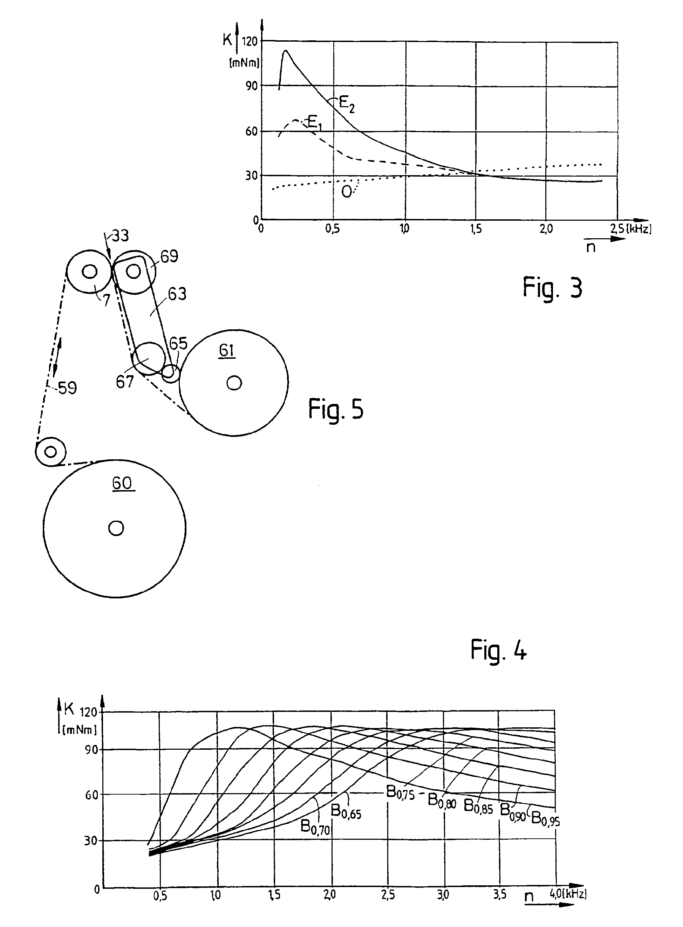

Bevorzugt wird man zwei Umlenkrollen **15** und **23** verwenden. Es kann aber auch mit nur einer einzigen gearbeitet werden, wenn das Speicherband **1** bereits an einem Ort tangential auf die Speicherspule **19** hin- bzw. weggeführt wird. Eine tangentiale Wegführung des Speicherbands in einer allerdings keine Bandschlaufe aufweisenden Ausführungsvariante ist in **Figur 5** dargestellt.

Ein jeweils auf die Achsen **5** und **20** wirkender Schrittmotor **43** in einem antreibenden bzw. bremsenden Modus wird durch eine im Schaltbild in **Figur 2** dargestellte Schaltung betrieben. Schematisch ist hier der Schrittmotor **43** lediglich durch seinen einen Permanentmagnet aufweisenden Rotor **44** und die beiden örtlich um 90° gegeneinander versetzten Erregerwicklungen **45a** und **45b**, welche auch als einander gegenüberliegende Wicklungspaare ausgebildet sein können, dargestellt. Die Erregerwicklungen **45a** und **45b** werden über eine Ansteuerschaltung **46** gesteuert erregt. Die Ansteuerschaltung **46** hat einen Mikroprozessor **47**, der die Transistoren **T1** bis **T4** und **T11** bis **T14** zweier Transistorbrückenschaltungen **49a** und **49b** entsprechend mit Strom beaufschlagt. Sind z.B. die beiden Transistoren **T12** und **T13** leitend, so ergibt sich in der Erregerspule **45a** ein Stromfluß in der Richtung **S**. Eine Schaltung, welche lediglich die Erregerwicklungen **45a** und **45b** im motorischen, antreibenden Betrieb steuert, ist bekannt.

Um einen Schrittmotor abzubremsen, hatte man bisher eine oder beide Erregerwicklungen **45a** und **45b** kurz geschlossen. Ein derartiges Bremsverhalten ist in **Figur 3** dargestellt, wobei auf der Ordinante die Bremskraft **K** und auf der Abszisse die Rotationsgeschwindigkeit n aufgetragen ist. Eine Kurve **O** zeigt ein Bremsverhalten eines nicht erregten Schrittmotors mit offenen Erregerwicklungen. Die gegen hohe Rotationsgeschwindigkeiten **n** ansteigende Bremskraft **K** wird durch Reibungskräfte, den Luftwiderstand, Hystereseverluste, Wirbelstromverluste, ... bewirkt. Ein Schrittmotor mit einem fremd angetriebenen Rotor (bremsen) wirkt als Generator. D.h. in seinen Erregerwicklungen wird ein über der Zeit sinusförmig verlaufender Strom induziert. Schließt man nun eine der beiden Erregerwicklungen **45a** oder **45b** kurz, so ergibt sich ein Bremsverhalten gemäß der Kurve **E1**. Schließt man beide Erregerwicklungen kurz, ergibt sich eine höhere Bremswirkung gemäß der Kurve **E2.** In beiden Fällen ergibt sich lediglich bei niedrigen Drehzahlen **n** eine hohe Bremswirkung, welche dann nahezu exponentiell zu hohen Drehzahlen **n** hin abnimmt.

Erfindungsgemäß werden nun nicht mehr eine, beide oder gar keine der Errregerwicklungen kurz geschlossen, sondern die Erregerwicklung gesteuert kurzgeschlossen. Hierzu wird eine Schaltung gemäß **Figur 2** verwendet. Eine in **Figur 2** eingezeichnete Schaltungseinheit **51** findet bei der nachfolgend beschriebenen Ansteuerung keinen Einsatz. Die Erregerwicklungen **45a** und **45b** werden nun gesteuert kurzgeschlossen. Das Kurzschließen erfolgt hier beispielsweise mit einer Clockfrequenz von 16 kHz. Das Bremsverhalten des Schrittmotors ist nur unwesentlich von der gewählten Clockfrequenz abhängig (100 Hz bis 100 kHz und höher). Die Erregerwicklung wird kurzgeschlossen, indem die beiden Transistoren **T11** und **T12** leitend geschaltet und die beiden Transistoren **T13** und **T14** gesperrt geschaltet werden. Analog werden die Transistoren **T1** bis **T4** für die Erregerwicklung **45b** geschaltet. Im Gegensatz zum bekannten Verfahren erfolgt nun dieses Kurzschalten während des Bremsvorgangs nicht kontinuierlich, sondern mit der oben erwähnten Taktfrequenz und einem einstellbaren Tastverhältnis. Ein "Kurzschlußwiderstand" **R** ergibt sich durch den Innenwiderstand der beiden Transistoren **T11** und **T12** bzw. **T1** und **T2**.

Die sich hierbei ergebenden Kurven sind in **Figur 4** beispielsweise von einem Schrittmotor des Typs 6600 der Firma Sonceboz dargestellt. Andere Schrittmotoren geben selbstverständlich andere Kurven. Das hier dargestellte charakteristische Bremsverhalten bleibt jedoch auch dort bestehen. Die in **Figur 4** dargestellten Bremsverlaufskurven **B_{0,95}** bis **B_{0,65}** kennzeichnen ein unterschiedliches Tastverhältnis, wobei der Index jeweils das Tastverhältnis angibt. 0,95 bedeutet somit, daß der Kurzschlußwiderstand **R** zu 95% der Periodendauer angeschaltet ist. D.h. lediglich während 5% der Bremszeit ist der induzierte Stromfluß durch die Erregerspulen **45a** und **45b** unterbrochen. Ein Vergleich der Kurve **B_{0,95}** mit den Kurvenformen **E1** und **E2** ergibt noch eine geringe Ähnlichkeit. Wird nun das Tastverhältnis weiter verringert, so ergibt sich erstaunlicherweise eine Verschiebung des Bremsmaximums zu höheren Drehzahlen hin. Auch wird der Abfall der Bremswirkung immer geringer. Durch die experimentelle optimale Einstellung der Bremswirkung mit einer entsprechenden Wahl des Tastverhältnisses kann somit die gewünschte Bremswirkung, insbesondere bei oben angeführtem Beispiel einer Banknotenspeicherung eingestellt werden, wobei hier infolge der gut einstellbaren Bremswirkung eine immer ausreichende Spannung des Speicherbandes **1** gewährleistet ist. Das Tastverhältnis ist äußerst einfach einzustellen. Eine Drehwinkelüberwachung des Rotors ist nicht notwendig.

Eine Verwendung der in **Figur 2** vorhandenen Schaltungseinheit **51** stellt zur obigen Beschreibung eine jedoch aufwendigere Schaltungsvariante dar. Die Schaltungseinheit **51** dient zur Bestimmung des Nulldurchgangs des in den Erregerspulen **45a** und **45b** induzierten Stroms. Mit einer einstellbaren Verzögerung wird nun der induzierte Strom nach seinem Nulldurchgang mit dem Kurzschlußwiderstand **R** belastet. Das Tastverhältnis kann einfach eingestellt werden, da die jeweiligen, eine Periodendauer bestimmenden Nulldurchgänge des in den Erregerwicklungen induzierten Stromes feststellbar sind. Die Periodendauer ändert sich zwar während des Bremsens. Pro Periode sind jedoch die Änderungen gering, so daß jeweils eine vorhergehende Periode zur neuen Definition des Tastverhältnisses vom Mikroprozessor **47** herangezogen werden kann, ohne daß ein merklicher Fehler auftritt.

Anstelle mit dem Mikroprozessor **47** eine zeitliche Verschiebung des Einschaltzeitpunktes einzustellen, kann zur Veränderung des Tastverhältnisses auch eine veränderbare Stromschwelle des induzierten Stromes herangezogen werden.

Die Führungseinheit **36** im Speicherbandeinlaufbereich muß nicht, wie in **Figur 1** dargestellt, mit einer Schlaufe **25** erfolgen. Es kann auch, wie in **Figur 5** dargestellt, ohne Schlaufe gearbeitet werden. Das Speicherband **59** geht dann von einer Bandreserve- zur Speicherspule **60** bzw. **61**. Vor dem Eintritt des Speicherbandes **59** in die Speicherspule **61** ist dann ebenfalls im Speicherbandeinlaufbereich eine gegen die Speicherbandoberfläche drückende Führungseinheit **63** vorhanden, welche hier ebenfalls analog zur auf der Oberfläche der Speicherrolle laufenden Rolle **15** eine Rolle **65** hat. Es ist dann ferner eine Umlenkrolle **67** sowie eine zur Anpreßrolle **9** analoge Rolle **69** vorhanden.

Eine Verwendung eines antreibenden Schrittmotors mit einem gemäß obigen Ausführungen gestalteten bremsenden Schrittmotor beschränkt sich nicht nur auf die Ein- und Ausspeicherung von Banknoten. Eine derartige Anordnung kann überall dort bevorzugt verwendet werden, wo ein band- bzw. fadenartiges Material unter Spannung auf- bzw. abgewickelt werden soll. Eine Verwendung der oben erläuterten Schaltung kann überall dort verwendet werden, wo Schrittmotoren gezielt gebremst werden müssen.

Die oben beschriebene Speichervorrichtung wird bevorzugt in Banknotenautomaten, vorzugsweise in selbstkassierenden Automaten eingesetzt. Anstelle von Banknoten können bei einer anderen Verwendung auch andere biegsame blattförmige Objekte wie Schecks, Typenschilder, Etiketten, Verpackungstüten, ... ein- und ausgespeichert werden. Die Objekte **33** müssen keineswegs gleiche Abmessungen aufweisen. Es ist lediglich darauf zu achten, daß eine durch den Ausschlaufbereich **21** gegebene minimale Querabmessung nicht unterschritten wird.

Anstatt die beiden Schrittmotoren auf die Achsen von Bandreservespule **3** bzw. **60** sowie von Speicherspule **19** bzw. **61** wirken zu lassen, können die Schrittmotor antreibend und bremsend auch über einen Reibschluß jeweils auf den Mantel der Spulen, d.h. auf das auf- bzw. abzuwickelnde Band wirken. Ein Reibschluß kann jedoch die Lebensdauer des Bandes reduzieren. Vorteilhaft ist jedoch, daß sowohl bremsender wie auch antreibender Motor mit gleicher Rotationsgeschwindigkeit auch bei sich änderndem Durchmesser der Wickelspeicher arbeiten können. Eine Einstellung des Bremsverhaltens, insbesondere des Tastverhältnisses kann dann in Abhängigkeit der vorgegebenen Pulsfrequenzen des antreibenden Schrittmotors erfolgen.

Anstatt beide Erregerwicklungen mit dem oben beschriebenen Bremsvorgang zu beaufschlagen, kann auch nur eine einzige angesteuert werden. Auch kann jede Erregerwicklung zwei voneinander trennbare Wicklungspakete aufweisen und nur jeweils eines derart gesteuert werden.

Auch kann eine "Bremsschaltung" bei einem im Antrieb befindlichen Motor vorgenommen werden, um eine Dämpfung seines Resonanzverhaltens zu erreichen. Der Eintritt in den Resonanzzustand ist in eindeutiger Weise aus dem Strom durch den Stromfluß durch die Erregerwicklungen erkennbar. Zum "Dämpfen" kann nun jeweils auf einen Erregerpuls ein entsprechender Bremspuls mit einem entsprechend eingestellten Tastverhältnis folgen. Es kann auch auf immer einige Erregerpulse ein Bremspuls und umgekehrt erfolgen. Ein Umschalten zwischen Erregen und Bremsen ist auf einfache Art und Weise durch die in **Figur 2** gezeigte Schaltung möglich; es müssen nur die Transistoren **T1** bis **T4** und **T11** bis **T14** entsprechend vom Mikroprozessor **47** angesteuert werden.

Anstatt ein Band oder einen Faden zwischen zwei Speicherspulen auf- und ab- bzw. umzuwickeln, kann auch nur von einer einzigen Spule gebremst abgewickelt werden.

## Patentansprüche

1. Anordnung zum gebremsten Transportieren von band- oder fadenartigem Material (1; 59), umfassend einen dieses Material speichernden Wickelspeicher (3, 19; 60, 61) und einen mit dem Wickelspeicher (3, 19; 60, 61) zusammenwirkenden und dadurch auf das Material (1; 59) wirkenden Schrittmotor (43) zur Bremsung des Materials (1; 59) in Bandlängsrichtung mit einer vorgebbaren Bremskraft, wobei der Schrittmotor (43) eine elektrische Ansteuerschaltung (46) zur elektrischen Steuerung dessen Erregerwicklungen (45a, 45b) aufweist, wobei ein Stromfluss durch die Erregerwicklungen (45a, 45b) des Schrittmotors (43) zu dessen Antrieb steuerbar ist, **dadurch gekennzeichnet, dass** passiv ohne jegliche Einspeisung eines externen Stromes durch jede Erregerwicklung (45a, 45b) mit der Ansteuerschaltung (46) ein vorgegebener Widerstand mit einem Tastverhältnis an jede Erregerwicklung (45a, 45b) anleg- und abschaltbar ist, um einen vorgebbaren Bremskraftverlauf in Abhängigkeit der Rotationsgeschwindigkeit des nicht erregten Motors zu erreichen.

2. Anordnung nach Anspruch 1, **dadurch gekennzeichnet, daß** die Ansteuerschaltung (46) eine gesteuerte Brückenschaltung (49a, 49b) hat, mit der im motorischen Betrieb ein Erregerstrom durch jede Erregerwicklung (45a, 45b) schaltbar ist und mit der in einem nicht erregten, generatorischen Betrieb ein durch die Drehung des Rotors (44) des Schrittmotors (43) in den Erregerwicklungen (45a, 45b) induzierter Strom mit einer vorgebbaren Clockfrequenz und/oder einem vorgebbaren Tastver-hältnis mit dem Widerstand zur Einstellung des vorgegebenen Bremsverhaltens be-aufschlagbar ist.

3. Anordnung nach Anspruch 2, **dadurch gekennzeichnet, daß** das "Widerstandsbeaufschlagen" mit dem Widerstand durch die Brückenschaltung (49a, 49b) bei Überschreiten einer einstellbaren Spannungsschwelle des in jeder Erregerwicklung (45a, 45b) induzierten Stromes im generatorischen Betrieb und/oder mit einer einstellbaren Verzögerung nach dem jeweiligen Stromnulldurchgang zur Einstellung des vorgegebenen Bremsverhaltens erfolgt.

4. Anordnung nach Anspruch 2, **dadurch gekennzeichnet, daß** mit der Brückenschaltung sowohl ein erregender Strom durch die jeweilige Erregerwicklung schaltbar ist und anschließend ein Induktionsstrom der jeweiligen Erregerspule mit dem Widerstand beaufschlagbar ist, damit eine gesteuerte Dämpfung einer Resonanz des Schrittmotors vornehmbar ist.

5. Anordnung nach einem der Ansprüche 1 bis 4, **dadurch gekennzeichnet, daß** der Schrittmotor (43) auf Antriebs- und auf Bremswirkung mit der Ansteuerschaltung (46) schaltbar ist, als Speicher (3, 19; 60, 61) für das band- oder fadenartige Material (1; 59) je einen Wickelspeicher, von dem es ab- bzw auf den es aufwickelbar ist, vorhanden ist, auf jeden Wickelspeicher (3, 19; 60, 61) einer der Schrittmotore (43) wirkt und die Bremswirkung des mit dem Wickelspeicher (3, 19; 60, 61) zusammenwirkenden Schrittmotors (43), von dem das Material (1, 59) abzuwickeln ist, derart vorgebbar ist, daß das Material (1; 59) gespannt, vorzugsweise mit einer bis auf eine Toleranz konstanten Spannung gespannt bleibt.

6. Anordnung nach einem der Ansprüche 1 bis 5, **dadurch gekennzeichnet, daß** das band- oder fadenartige Material (1; 59) ein Speicherband (1; 59) und einer der beiden Wickelspeicher eine Speicherspule (19; 61) und der andere Wickelspeicher eine Bandreservespule (3; 60) ist, und im Speicherbandeinlaufbereich zur Speicherspule eine gegen die Speicherbandoberfläche drückende Führungseinheit (36; 63) mit einem Einzug-/Ausgabemittel (35, 7, 9; 7, 69) für blattförmige Objekte, insbesondere Banknoten (33) angeordnet ist, welche zur Übergabe der Objekte (33) dienen, damit diese zwischen Speicherbandlagen auf der Speicherspule (19, 60) ein- und ausspeicherbar sind.

7. Anordnung nach Anspruch 6, **dadurch gekennzeichnet, daß** die Führungseinheit (36: 63) eine auf der Speicherspulenoberfläche abrollende, in unmittelbarer Nähe des Speicherbandeintritts auf die Spule (19; 61) angeordneten Rolle (15; 65) hat, deren Achsabstand zur Speicherspulenachse (20) mit sich je nach auf- bzw. abgewickeltem Speicherband (1; 59) änderndem Speicherspulendurchmesser änderbar ist.

8. Anordnung nach Anspruch 6 oder 7, **dadurch gekennzeichnet, daß** aus der Speicherspule (19) eine Bandschlaufe (25) des Speicherbandes (1) als Führungseinheit derart herausgeführt ist, daß ein Schlaufenbandteil als erster Bandteil (29) parallel zu einem zweiten, zur Bandreservespule führender Bandteil (11) auf einem Wegstück mit einer vorgebbaren Preßkraft (P) aneinander preßbar verläuft, und ein Zusammenführungsbereich (35) der beiden Bandteile (29, 11) als Einzug-/Ausgabemittel dient und die Preßkraft (P) durch das vorgebbare Bremsverhalten des auf Bremsen geschalteten Schrittmotors (43) erreichbar ist.

## Claims

1. Arrangement for the braked transporting of tape-like or thread-like material (1; 59), comprising a winding store (3, 19; 60, 61) which stores this material and a stepping motor (43) which interacts with the winding store (3, 19; 60, 61) and acts on the material (1; 59) as a result, for braking the material (1; 59) in the longitudinal direction of the tape with a predefinable braking force, the stepping motor (43) having an electric actuating circuit (46) for the electric control of its exciter windings (45a, 45b), it being possible for a current flow through the exciter windings (45a, 45b) of the stepping motor (43) in order to drive it, **characterized in that**, passively without any feeding in at all of an external current through each exciter winding (45a, 45b), a predefined resistance with a duty factor can be applied and switched off at each exciter winding (45a, 45b) by way of the actuating circuit (46), in order to achieve a predefinable braking-force profile as a function of the rotational speed of the non-excited motor.

2. Arrangement according to Claim 1, **characterized in that** the actuating circuit (46) has a controlled bridge circuit (49a, 49b), by way of which an exciter current can be switched through each exciter winding (45a, 45b) during motor operation and by way of which, in a non-excited, generator mode, a current which is induced in the exciter windings (45a, 45b) by the rotation of the rotor (44) of the stepping motor (43) and has a predefinable clock frequency and/or a predefinable duty factor can be loaded with the resistance for setting the predefined braking behaviour.

3. Arrangement according to Claim 2, **characterized in that** the "resistance loading" takes place with the resistance through the bridge circuit (49a, 49b) when an adjustable voltage threshold of the current which is induced in each exciter winding (45a, 45b) is exceeded in generator mode and/or with an adjustable delay after the respective current zero crossing, for setting the predefined braking behaviour.

4. Arrangement according to Claim 2, **characterized in that** both an exciting current can be switched through the respective exciter winding and subsequently an induction current of the respective exciter coil can be loaded with the resistance by way of the bridge circuit, in order that controlled damping of a resonance of the stepping motor can be performed.

5. Arrangement according to one of Claims 1 to 4, **characterized in that** the stepping motor (43) can be switched to drive action and to braking action by way of the actuating circuit (46), there is, as store (3, 19; 60, 61) for the tape-like or thread-like material (1; 59), in each case one winding store, from which it can be unwound or onto which it can be wound up, one of the stepping motors (43) acts on each winding store (3, 19; 60, 61), and the braking action of the stepping motor (43) which interacts with the winding store (3, 19; 60, 61) and from which the material (1, 59) is to be unwound can be predefined in such a way that the material (1; 59) remains tensioned, preferably tensioned with a stress which is constant apart from a tolerance.

6. Arrangement according to one of Claims 1 to 5, **characterized in that** the tape-like or thread-like material (1; 59) is a store tape (1; 59) and one of the two winding stores is a store spool (19; 61) and the other winding store is a tape reserve spool (3; 60), and a guiding unit (36; 63) which presses against the store-tape surface and has an intake/discharge means (35, 7, 9; 7, 69) for sheet-shaped objects, in particular banknotes (33), is arranged in the store-tape inlet region to the store spool, which intake/discharge means (35, 7, 9; 7, 69) serve to transfer the objects (33), in order that they can be sent to and removed from the store between store-tape layers on the store spool (19, 60).

7. Arrangement according to Claim 6, **characterized in that** the guiding unit (36; 63) has a roller (15; 65) which rolls on the store-spool surface, is arranged in the immediate vicinity of the store-tape inlet to the spool (19; 61), and the axial spacing of which from the store-spool axis (20) can be changed as the store-spool diameter changes depending on the store tape (1; 59) which has been wound up or unwound.

8. Arrangement according to Claim 6 or 7, **characterized in that** a tape loop (25) of the store tape (1) is guided out of the store spool (19) as guiding unit in such a way that a loop tape part extends, as first tape part (29), on a segment parallel to a second tape part (11) which leads to the tape reserve spool, such that they can be pressed against one another with a predefinable pressing force (P), and a merging region (35) of the two tape parts (29, 11) serves as intake/discharge means and the pressing force (P) can be achieved by the predefinable braking behaviour of the stepping motor (43) which is switched to braking.

## Revendications

1. Système de transport freiné d'un matériau (1; 59) en forme de ruban ou de fil, qui comprend une réserve d'enroulement (3, 19; 60,61) qui accumule ce matériau et un moteur pas à pas (43) qui coopère avec la réserve d'enroulement (3, 19; 60, 61) et qui agit ainsi sur le matériau (1; 59) pour freiner le matériau (1; 59) dans le sens de la longueur du ruban sous une force de freinage prédéterminée,
le moteur pas à pas (43) présentant un circuit électrique de commande (46) qui commande électriquement ses bobinages d'excitateur (45a, 45b),
le courant traversant les bobinages d'excitateur (45a, 45b) du moteur pas à pas (43) pouvant être commandé pour entraîner ce dernier,
**caractérisé en ce que**
le circuit de commande (46) peut appliquer et débrancher une résistance prédéterminée dans chaque bobinage d'excitateur (45a, 45b) à un rapport d'échantillonnage entre chaque bobinage d'excitateur (45a, 45b), passivement et sans injection de courant externe, pour obtenir une évolution prédéterminée de la force de freinage en fonction de la vitesse de rotation du moteur non excité.

2. Système selon la revendication 1, **caractérisé en ce que** le circuit de commande (46) présente un circuit de pont asservi (49a, 49b) qui permet de commuter un courant d'excitateur dans chaque bobinage d'excitateur (45a, 45b) en fonctionnement comme moteur et d'appliquer dans les bobinages d'excitateur (45a, 45b) un courant induit par la rotation du rotor (44) du moteur pas à pas (43) en fonctionnement comme générateur et sans excitation, à une fréquence d'horloge prédéterminée et/ou dans un rapport d'échantillonnage prédéterminé avec la résistance pour établir le comportement prédéterminé de freinage.

3. Système selon la revendication 2, **caractérisé en ce que** pour établir le comportement prédéterminé de freinage, "l'application d'une résistance" par le circuit de pont (49a, 49b) s'effectue lorsqu'un seuil réglable de tension du courant induit dans chaque bobinage d'excitateur (45a, 45b) en fonctionnement en générateur est dépassé et/ou avec un retard réglable après chaque passage du courant par zéro.

4. Système selon la revendication 2, **caractérisé en ce que** le circuit de pont permet de commuter à la fois un courant d'excitation dans chaque bobinage d'excitateur et ensuite d'appliquer un courant d'induction de chaque bobinage d'excitateur par la résistance pour ainsi amortir de manière contrôlée la résonance du moteur pas à pas.

5. Système selon l'une des revendications 1 à 4, **caractérisé en ce que** le moteur pas à pas (43) peut être commuté en effet d'entraînement et en effet de freinage par le circuit de commande (46), **en ce qu'**une réserve d'enroulement de laquelle le matériau peut être déroulé ou sur laquelle il peut être enroulé est prévue comme réserve (3, 19; 60, 61) de matériau (1;59) en forme de ruban ou de fil, **en ce que** l'un des moteurs pas à pas (43) agit sur chaque réserve d'enroulement (3, 19; 60, 61) et **en ce que** l'effet de freinage du moteur pas à pas (43) qui coopère avec la réserve d'enroulement (3, 19; 60, 61) de laquelle le matériau (1; 59) doit être déroulé peut être prédéterminé de telle sorte que le matériau (1; 59) soit tendu et de préférence reste tendu à une tension constante à la tolérance permise près.

6. Système selon l'une des revendications 1 à 5, **caractérisé en ce que** le matériau (1; 59) en forme de ruban ou de fil est un ruban de réserve (1; 59) et l'une des deux réserves d'enroulement est une bobine de réserve (19; 61), l'autre réserve d'enroulement étant une bobine (3; 60) de réserve de ruban, une unité de guidage (36; 63) qui repousse la surface du ruban de réserve et qui est dotée d'un moyen d'introduction et/ou d'extraction (35, 7, 9; 7, 69) d'objets en forme de feuille, en particulier de billets de banque (33), étant disposée dans la partie d'entrée de ruban de réserve sur la bobine de réserve et servant à transmettre les objets (33) de telle sorte que ces derniers puissent être introduits dans la bobine de réserve (19, 60) et en être extraits entre les couches de ruban de réserve.

7. Système selon la revendication 6, **caractérisé en ce que** l'unité de guidage (36; 63) présente un galet (15; 65) qui roule sur la surface de la bobine de réserve, disposé à proximité immédiate de l'entrée du ruban de réserve sur la bobine (19; 61) et dont la distance axiale par rapport à l'axe (20) de la bobine de réserve peut être modifiée lorsque le diamètre de la bobine de réserve varie en fonction de l'enroulement et du déroulement du ruban de réserve (1; 59).

8. Système selon les revendications 6 ou 7, **caractérisé en ce qu'**une boucle (25) de ruban de réserve (1) est extraite de la bobine de réserve (19) comme unité de guidage, de telle sorte que sur une partie du parcours, une partie du ruban en boucle s'étend comme première partie de ruban (29) parallèlement à une deuxième partie de ruban (11) qui conduit à la bobine de réserve de ruban et étant repoussée contre l'autre avec une force de poussée (P) prédéterminée, **en ce qu'**une zone (35) de rassemblement des deux parties de ruban (29, 11) sert de moyen d'introduction et d'extraction et **en ce que** la force de poussée (P) est obtenue par le comportement prédéterminé de freinage du moteur pas à pas (43) branché en freinage.
